Europäisches Patentamt

European Patent Office

Office européen des brevets

(11) Veröffentlichungsnummer: **0 215 350**
A2

# EUROPÄISCHE PATENTANMELDUNG

(21) Anmeldenummer: **86111863.6**

(22) Anmeldetag: **27.08.86**

(51) Int. Cl.⁴: **B 23 B 31/16**

(30) Priorität: **14.09.85 DE 3532934**

(43) Veröffentlichungstag der Anmeldung: **25.03.87**
**Patentblatt 87/13**

(84) Benannte Vertragsstaaten: **CH DE FR GB LI SE**

(71) Anmelder: **Paul Forkardt GmbH & Co. KG,**
**Rosenstrasse 44-46, D-4000 Düsseldorf 30 (DE)**

(72) Erfinder: **Steinberger, Josef, Sebastiansweg 30,**
**D-4000 Düsseldorf (DE)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11 (DE)**

(54) **Spannfutter.**

(57)    Die Erfindung betrifft ein Spannfutter mit mehreren in einem Futterkörper radial beweglich geführten Spannbacken, die jeweils durch mindestens eine axial beweglich im Futterkörper gelagerte Keilstange antreibbar sind, die einen kreisabschnittförmigen Querschnitt mit einem Zentriwinkel von mindestens 180° zur Lagerung im Futterkörper aufweist und an ihrer der Spannbacke zugewandten Längsfläche mittels eines schräg zur Drehachse des Spannfutters verlaufenden Vorsprungs und einer dem Vorsprung entsprechenden, geneigten Aussparung mit der Seitenfläche der Spannbacke in Eingriff steht. Um die Belastung der Keilstangen und deren Verschleiß durch konstruktive Mittel ohne Vergrößerung des Raumbedarfes herabzusetzen und damit die Funktionsfähigkeit und Lebensdauer des Spannfutters zu verbessern, sind der Vorsprung und die ihn aufnehmende Aussparung im Querschnitt trapezförmig ausgebildet.

Paul Forkardt GmbH & Co. KG, Rosenstraße 44-46,
4000 Düsseldorf 30

Spannfutter

---

Die Erfindung betrifft ein Spannfutter mit mehreren in einem Futterkörper radial beweglich geführten Spannbacken, die jeweils durch mindestens eine axial beweglich im Futterkörper gelagerte Keilstange antreibbar sind, die einen kreisabschnittförmigen Querschnitt mit einem Zentriwinkel von mindestens 180° zur Lagerung im Futterkörper aufweist und an ihrer der Spannbacke zugewandten Längsfläche mittels eines schräg zur Drehachse des Spannfutters verlaufenden Vorsprunges und einer dem Vorsprung entsprechenden, geneigten Aussparung mit der Seitenfläche der Spannbacke in Eingriff steht.

Derartige Spannfutter, die auch als Keilstangenfutter bezeichnet werden, sind bekannt. Der einstückig mit der Keilstange auf deren der Spannbacke zugewandten Längsfläche ausgebildete Vorsprung verläuft schräg zur Drehachse des Spannfutters und greift in eine geneigte Aussparung in der Seitenfläche der Spannbacke ein, so daß bei einer axialen Bewegung der Keilstange eine radiale Verstellbewegung der Spannbacke erfolgt. Sämtliche Keilstangen werden vorzugsweise gemeinsam durch ein axial beweglich im Futterkörper geführtes Verstellglied betätigt, so daß sich eine zentrische Spannbewegung der Spannbacken ergibt, und zwar sowohl zur Erzielung einer Außenspannung als auch einer Innenspannung. Die Spannbacken können einteilig ausgeführt oder aus Grund- und Aufsatzbacken gebildet sein.

Bei den bekannten Konstruktionen besitzen die in der Art eines Keiles wirkenden Vorsprünge einen rechteckigen Querschnitt. Hierdurch ergibt sich der Nachteil, daß die Reaktionskräfte für die von den Keilstangen auf die Spannbacken zu übertragenden Antriebskräfte im Bereich der Trennebene zwischen Spannbacke einerseits und Futterkörper sowie Keilstange andererseits aufgenommen werden müssen. Die Keilstangen erfahren dementsprechend eine starke Belastung an ihren Kanten; die hieraus resultierende hohe Flächenpressung an den Kanten führt zu einer hohen Reibung und einem dementsprechenden Verschleiß.

Der Erfindung liegt die Aufgabe zugrunde, bei einem Spannfutter der eingangs beschriebenen Art die Belastung der Keilstangen und deren Verschleiß durch konstruktive Mittel ohne Vergrößerung des Raumbedarfes herabzusetzen, um die Funktionsfähigkeit und Lebensdauer des Spannfutters zu verbessern.

Die Lösung dieser Aufgabenstellung durch die Erfindung ist dadurch gekennzeichnet, daß der dem Eingriff zwischen Spannbacke und Keilstange dienende Vorsprung und die ihn aufnehmende Aussparung im Querschnitt trapezförmig ausgebildet sind.

Durch diese trapezförmige Ausbildung von Vorsprung und Aussparung ergibt sich nicht nur bei gleichem Raumbedarf eine Vergrößerung der die Antriebskräfte übertragenden Fläche, sondern eine Verlagerung der die Reaktionskräfte aufnehmenden Lagerfläche aus dem Bereich der Trennebene in einen Bereich, in dem sich die Keilstange mit ihrer teilzylindrischen
Mantelfläche in einer entsprechenden Bohrung des Futterkörpers abstützt. Die Lagerfläche liegt hierbei nicht nur in
einem Bereich, der durch die Senkrechte auf die geneigte
Lagerfläche zwischen Vorsprung und Aussparung bestimmt wird,
sondern wird durch den Reibungswinkel noch stärker weg von
der Trennebene zwischen Spannbacke und Futterkörper bzw.
Keilstange verlagert. Auf diese Weise werden nicht nur unerwünschte Kantenpressungen vermieden und durch großflächige
Abstützungen ersetzt, sondern zugleich bessere Wirkungsgrade
des Spannfutters erzielt. Infolge der geringeren Anforderungen an die Tragfähigkeit des Schmiermittels verringert
sich auch der Verschleiß, so daß ohne Veränderung des für die
Keilstangen notwendigen Bauvolumens die Lebensdauer des
Spannfutters vergrößert wird. Ebenso wird der Wirkungsgrad
des Spanngetriebes verbessert.

Obwohl es bei der erfindungsgemäßen Ausbildung möglich ist,
den Vorsprung an der Seitenfläche der Spannbacke und die Aussparung in der Längsfläche der Keilstange auszubilden, ergibt
sich in Übereinstimmung mit den bekannten Konstruktionen eine
besonders günstige Ausführung, wenn der Vorsprung auf der
Längsfläche der Keilstange und die Aussparung in der Seitenfläche der Spannbacke ausgebildet wird, weil sich diese Ausführung auf besonders wirtschaftliche Weise herstellen läßt.

Gemäß einem weiteren Merkmal der Erfindung kann jede Spannbacke durch zwei einander gegenüberliegende Keilstangen angetrieben werden, so daß sich nicht nur eine symmetrische Einleitung der Antriebskräfte in die Spannbacke ergibt, sondern
auftretende Querkräfte zwischen Spannbacke und Keilstangen
gegeneinander aufgehoben werden.

Bei einer bevorzugten Ausführungsform der Erfindung ist jede
Keilstange mit einer Verdrehsicherung gegen Verdrehen im Futterkörper gesichert. Dazu kann die Keilstange als Mehrkeilprofil ausgebildet sein oder mit einem sonstigen bekannten Zahnprofil versehen sein. Als einfache Verdrehsicherung kann eine Paßfeder im Bereich der teilzylindrischen Mantelfläche zwischen Keilstange und Futterkörper angeordnet sein.

Auf der Zeichnung sind Ausführungsbeispiele des erfindungsgemäßen Spannfutters dargestellt, und zwar zeigen:

Fig. 1   eine Stirnansicht auf einen Teil eines Spannfutters,

Fig. 2   einen Längsschnitt durch das Spannfutter gemäß der Schnittlinie II - II in Fig.1,

Fig. 3   eine perspektivische Darstellung einer Keilstange des Spannfutters nach den Figuren 1 und 2 und

Fig. 4   weitere Ausführungsformen des Spannfutters mit Verdrehsicherungen für die Keilstangen.

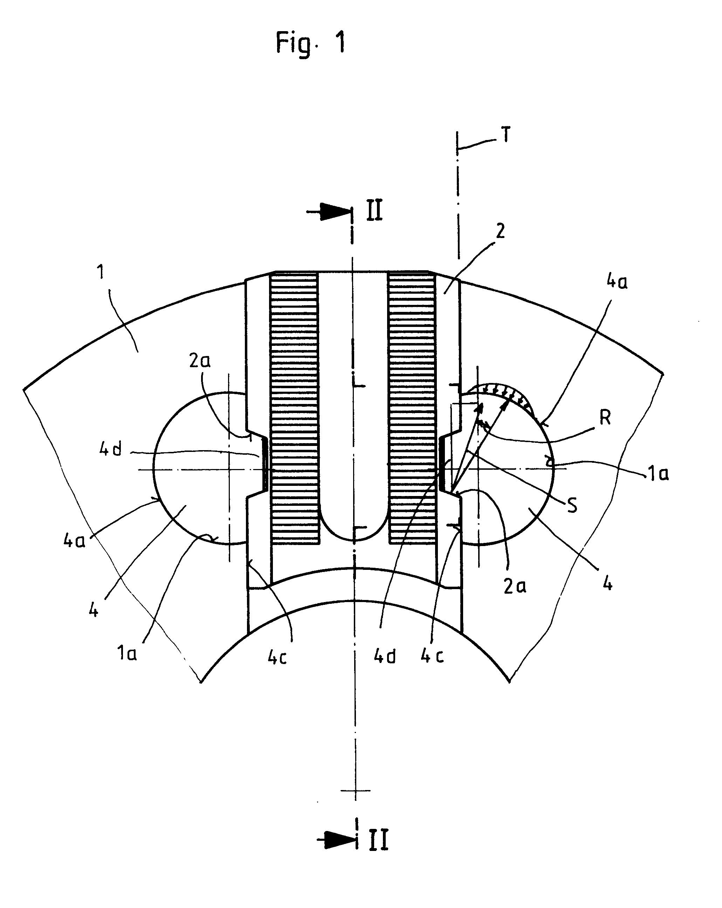

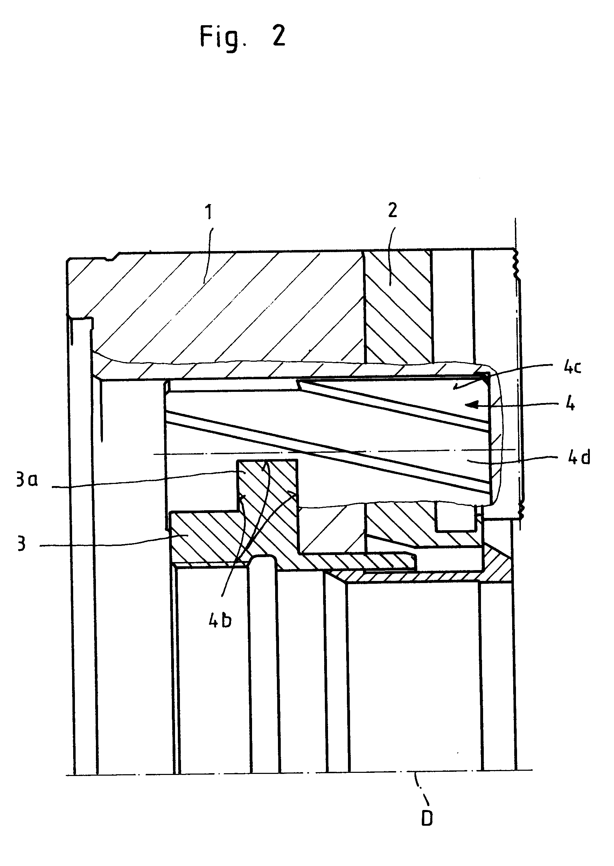

Das in den Figuren 1 bis 3 dargestellte erste Ausführungsbeispiel des Spannfutters umfaßt einen Futterkörper 1, in dem mehrere Spannbacken radial beweglich geführt sind. In den Figuren 1 und 2 ist lediglich ein Teil des Futterkörpers 1 mit einer Grundbacke 2 dargestellt, die zusammen mit einer nicht gezeichneten Aufsatzbacke eine Spannbacke bildet. In einer zentralen Bohrung des Futterkörpers 1 ist ein Futterkolben 3 axial beweglich geführt, der über Keilstangen 4 sämtliche Grundbacken 2 antreibt.

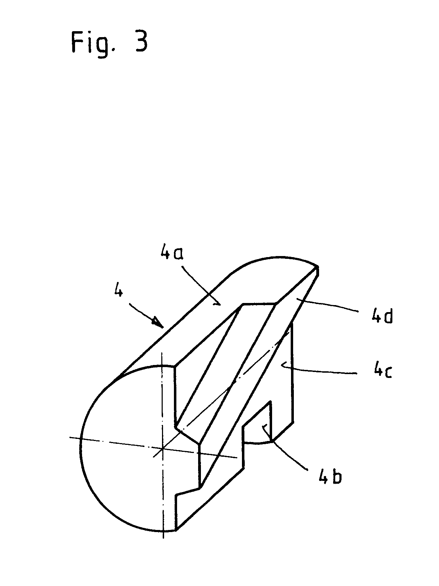

Ein erstes Ausführungsbeispiel einer derartigen Keilstange 4 ist perspektivisch in Fig.3 gezeichnet. Die Zeichnung zeigt den Querschnitt der Keilstange 4 in Form eines Kreisabschnittes mit einem Zentriwinkel, der beim Ausführungsbeispiel geringfügig größer als 180° ist und mindestens 180° beträgt, damit die Keilstange 4 mit einer teilzylindrischen Mantelfläche 4a axial verschiebbar in einer entsprechenden Bohrung 1a des Futterkörpers 1 gelagert werden kann, wie dies insbe-

sondere Fig.1 erkennen läßt. Über einen Einschnitt 4b, in den ein ringförmiger Flansch 3a des Futterkolbens 3 eingreift, ist jede Keilstange 4 mit dem Futterkolben 3 verbunden, so daß eine axiale Bewegung des beispielsweise von einem Druckmittelzylinder angetriebenen Futterkolbens 3 eine entsprechende axiale Bewegung sämtlicher Keilstangen 4 zur Folge hat.

Beim ersten Ausführungsbeispiel nach den Figuren 1 bis 3 ist jede Keilstange 4 an ihrer der Spannbacke 2 zugewandten Längsfläche 4c mit einem schräg zur Drehachse D des Spannfutters verlaufenden Vorsprung 4d versehen, der in eine dem Vorsprung entsprechende, geneigte Aussparung 2a in der Seitenfläche der Spannbacke 2 eingreift. Dieser Eingriff ist am besten in Fig.1 zu erkennen. Aufgrund dieses schräg verlaufenden Vorsprunges 4d und der entsprechend geneigten Aussparung 2a erfolgt eine Verbindung zwischen Keilstange 4 und Grundbacke 2, die bei einer axialen Bewegung der Keilstange 4 eine radiale Verstellbewegung der Grundbacke 2 zur Folge hat.

Der Vorsprung 4d der Keilstange 4 und die ihn aufnehmende Aussparung 2a der Grundbacke 2 sind im Querschnitt trapezförmig ausgebildet. Hierdurch ergibt sich einerseits eine Vergrößerung der Lagerfläche zwischen Keilstange 4 und Grundbacke 2 im Verhältnis zu einer Ausführung mit rechteckigem Querschnitt, und zwar ohne Vergrößerung der Höhe des Vorsprunges 4d bzw. der Tiefe der Aussparung 2a. Andererseits wird durch diese trapezförmige Ausbildung des Querschnittes erreicht,daß sich die die Reaktionskräfte aus dem Antrieb aufnehmende Lagerfläche zwischen Keilstange 4 und Futterkörper 1 aus dem Bereich der Trennebene T zwischen Keilstange 4 und Grundbacke 2 verlagert, die in der rechten Hälfte der Fig.2 eingezeichnet ist. Das Zentrum der Lagerfläche wird hierbei nicht durch die Senkrechte S auf die geneigte Lagerfläche zwischen Vorsprung 4d und Aussparung 2a gebildet, sondern durch den Reibungswinkel R weiter weg von der Trennebene T verlagert. Es ergibt sich somit zur Aufnahme der Reaktionskräfte eine große Lagerfläche zwischen der Mantelfläche 4a der Keilstange 4 und der Bohrung la im Futterkörper 1, die außerhalb der Trennebene T zwischen Keilstange 4 und Grundbacke 2 liegt. Diese Lagerfläche und die in ihr auftretenden Reaktionskräfte sind im rechten Teil der Fig.1 angedeutet.

Mit der voranstehend beschriebenen trapezförmigen Ausbildung des Vorsprunges 4d und der entsprechenden Aussparung 2a werden somit nicht nur unerwünschte Kantenpressungen vermieden und durch großflächige Abstützungen ersetzt, sondern zugleich bessere Wirkungsgrade des Spannfutters erzielt, weil sich infolge der geringeren Anforderungen an die Tragfähigkeit des Schmiermittels auch die Reibung und der Verschleiß verringern.

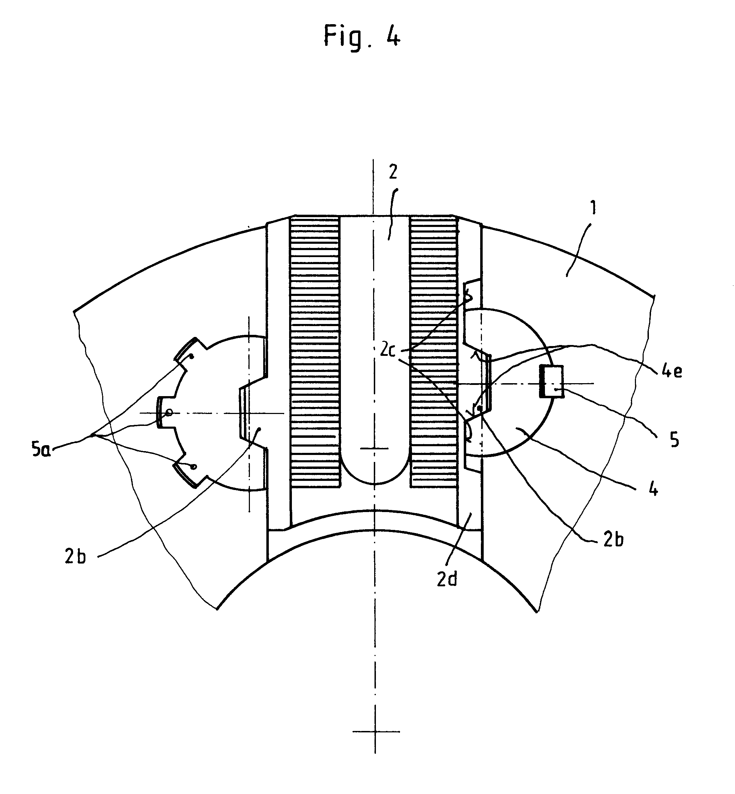

Das Ausführungsbeispiel gemäß Fig.4, die in der Darstellung der Fig.1 entspricht, zeigt eine Ausführung, bei der der Vorsprung 2b an der Seite der Grundbacke 2 und die Aussparung 4e in der Längsfläche 4c der Keilstange 4 ausgebildet sind. Auch bei dieser Ausführungsform ergeben sich die voranstehend geschilderten Vorteile der Verlagerung der Lagerfläche aus der Trennebene T in den teilzylindrischen Bereich der sich in der Bohrung la des Futterkörpers 1 abstützenden Mantelfläche 4a der Keilstange 4. Die Ausführungsform nach Fig.4 zeigt weiterhin Verdrehsicherungen, die verhindern, daß sich die Keilstange 4 in der Bohrung la des Futterkörpers 1 um ihre Längsachse verdreht. In der rechten Hälfte des Ausführungsbeispiels ist zu diesem Zweck eine Paßfeder 5 im Bereich der Mantelfläche 4a zwischen Keilstange 4 und Futterkörper 1 angeordnet. Die linke Hälfte zeigt eine Verdrehsicherung, bei der die Keilstange 4 ein Mehrkeilprofil mit drei Keilen 5a aufweist.

. -

In der rechten Hälfte der Fig.4 ist weiterhin gezeigt, daß der Vorsprung 2b an der Seitenfläche der Grundbacke 2 innerhalb einer Vertiefung 2c ausgebildet ist und daß die Aussparung 4e in der Keilstange 4 ausgeführt ist. Bei dieser Konstruktion greift die Keilstange 4 mit ihren beidseits der Aussparung 4e liegenden Teilen in die Vertiefung 2c der Grundbacke 2 ein. Hierdurch wird ein Herausragen des Vorsprunges 2b aus dem Backenprofil im wesentlichen verhindert; außerdem wirkt das sich in radialer Richtung nach innen an die Vertiefung 2c anschließende Teil 2d der Grundbacke 2 als Backensicherung für den Fall, daß der Vorsprung 2b brechen sollte.

Bezugszeichenliste:

1   Futterkörper
1a  Bohrung
2   Grundbacke
2a  Aussparung
2b  Vorsprung
2c  Vertiefung
2d  Teil
3   Futterkolben
3a  Flansch
4   Keilstange
4a  Mantelfläche
4b  Einschnitt
4c  Längsfläche
4d  Vorsprung
4e  Aussparung
5   Paßfeder

D   Drehachse
R   Reibungswinkel
S   Senkrechte
T   Trennebene

Patentansprüche:

1. Spannfutter mit mehreren in einem Futterkörper radial beweglich geführten Spannbacken, die jeweils durch mindestens eine axial beweglich im Futterkörper gelagerte Keilstange antreibbar sind, die einen kreisabschnittförmigen Querschnitt mit einem Zentriwinkel von mindestens 180° zur Lagerung im Futterkörper aufweist und an ihrer der Spannbacke zugewandten Längsfläche mittels eines schräg zur Drehachse des Spannfutters verlaufenden Vorsprunges und einer dem Vorsprung entsprechenden, geneigten Aussparung mit der Seitenfläche der Spannbacke in Eingriff steht, **dadurch gekennzeichnet,** daß der Vorsprung (4d,2b) und die ihn aufnehmende Aussparung (2a,4e) im Querschnitt trapezförmig ausgebildet sind.

2. Spannfutter nach Anspruch 1, dadurch gekennzeichnet, daß der Vorsprung (4d) auf der Längsfläche (4c) der Keilstange (4) und die Aussparung (2a) in der Seitenfläche der Spannbacke (2) ausgebildet ist.

3. Spannfutter nach Anspruch 1, dadurch gekennzeichnet, daß der Vorsprung (2b) auf der Seitenfläche der Spannbacke (2) in einer Vertiefung (2c) und die Aussparung (4e) in der Keilstange (4) ausgebildet ist, die mit ihren beidseits der Aussparung (4e) liegenden Teilen in die Vertiefung (2c) der Spannbacke (2) eingreift.

4. Spannfutter nach Anspruch 1 bis 3, dadurch gekennzeichnet, daß jede Spannbacke (2) durch zwei einander gegenüberliegende Keilstangen (4) angetrieben ist.

5. Spannfutter nach mindestens einem der Ansprüche 1 bis 4, dadurch gekennzeichnet, daß jede Keilstange (4) mit einer

0215350

Verdrehsicherung (5) gegen Verdrehen im Futterkörper (1) gesichert ist.

6. Spannfutter nach Anspruch 5, dadurch gekennzeichnet, daß die Keilstange (4) als Mehrkeilprofil ausgebildet ist.

7. Spannfutter nach Anspruch 5, dadurch gekennzeichnet, daß als Verdrehsicherung eine Paßfeder (5) im Bereich der teilzylindrischen Mantelfläche (4a) zwischen Keilstange (4) und Futterkörper (1) angeordnet ist.

Fig. 1

Fig. 2

Fig. 3

Fig. 4